**Europäisches Patentamt**

**European Patent Office**

**Office européen des brevets**

(19)

(11) **EP 1 271 198 A1**

(12) **EUROPEAN PATENT APPLICATION**

(43) Date of publication:
**02.01.2003 Bulletin 2003/01**

(51) Int Cl.7: **G02B 6/34**

(21) Application number: **01115917.5**

(22) Date of filing: **29.06.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Schott Glass**<br>**55122 Mainz (DE)**<br><br>(72) Inventors:<br>• **Vingerling, Bram**<br>**35415 Pohlheim-Hausen (DE)** | • **Tikhonravov, Alexander V.**<br>**Moscow (RU)**<br>• **Thelen, Alfred**<br>**60439 Frankfurt am Main (DE)**<br><br>(74) Representative: **Herden, Andreas F.**<br>**Blumbach, Kramer & Partner GbR**<br>**Patentanwälte**<br>**Alexandrastrasse 5**<br>**65187 Wiesbaden (DE)** |

(54) **Optical filter arrangement**

(57)     Optical filter arrangement comprising an optical filter (4) and an optical element (1) compensating or flattening at least a portion of a group delay profile generated by said optical filter (4).

Fig. 12

**Description**

The invention concerns an optical filter arrangement in general and especially an optical filter arrangement comprising an optical filter which generates a group delay and based thereon a spectral group delay profile at least within a spectral interval.

Optical filters are of increasing interest, especially in the field of optical communication and signal processing. Optical thin film multilayer filters having dielectric layers with alternating or different index of refraction are widely used for spectral filtering purposes, especially in case of narrow-optical pass band and in case of ultra narrow optical pass band filters as e.g. optical WDM and DWDM Filters, (Dense Wavelenght Division and Multiplexing Filters).

With ever increasing transmission rates of optical signals, signal distortion introduced by group delay effects in narrrow band-pass filters are playing a significant role within the transmission chain between transmitter and receiver.

To avoid any undue signal interferences, phase properties of optical filters, especially optical multilayer filters, were investigated in very detail. A.V. Tikhonravov, P.W. Baumeister and K.V. Popov are discussing phase shifts upon transmission of a non absorbing multilayer in Applied Optics Vol.36, no. 19, July 01, 1997, pp.4382 ff. However, no hint is given in view of an optimisation of a group delay characteristic of an optical pass band filter.

R. Austin, B. Golubovic are disclosing group delay dispersive multilayer mirror structures and methods for designing these structures for so-called ultra-fast lasers which deliver ultra short pulses, for example less than about 100 femto seconds (fs). These mirrors are designed to reflect over a broad spectral region including a spectral range of about 700 nm filter with high reflectivity. As ultra short pulses are broad band signals i.e. comprise a huge range of spectral components interpreted as optical signal, high reflectivity over the large spectral range has to be provided by an optimized laser mirror comprising a negative group delay dispersion against frequency. Realising this negative group delay dispersion over about 150THz bandwidth is achieved by application of well known chirped dielectric mirror designs.

US 6,154,318 issued to R. Austin and R. Edmond are disclosing such a mirror having a very high reflectance from about 600 to about 1200 nm.

R.Szipöcs e.a. in Appl.Phys.B May 24, 2000. DOI 10.1007/s003400000303 describe multicavity Gires-Tournois interferometers more recently developed as an alternative approach to achieve highly reflective mirrors showing negative group delay dispersion over around 50THz bandwidth in the visual. The application is typically for ultra-fast femtosecond lasers.

Optical filter arrangements especially as used in optical signal transmission and communication systems typically are narrow or ultra-narrow pass-band filters.

It is an object of the invention to provide an optical filter arrangement allowing for an increased amount of transmitted optical information without introduction of undue distortions of the optical signal.

This object is achieved with an optical filter arrangement as defined in claims 1 and 32 and with a ripple flattener for an optical filter according to claim 34 and a group delay profile flattener for an optical filter as defined in claim 36.

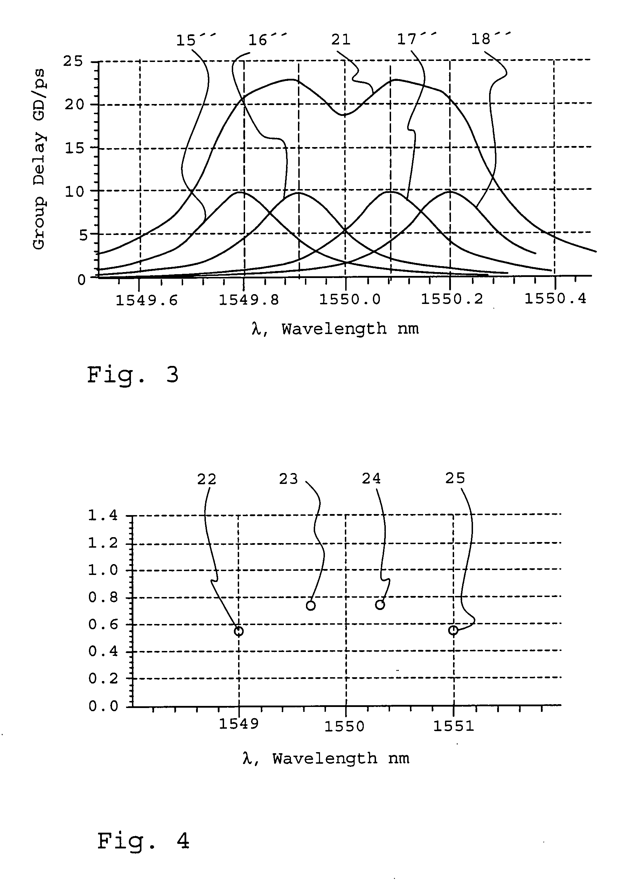

To achieve an increased transmission of optical information within a predefined optical pass-band a first approach adopts pass-band filters with deep aches of the spectral transmission function of the optical filter at the edges of the filter pass band. Such a filter is shown in Fig. 3 where within a transmission interval of about 1549.9 to 1550,1 nm, i.e. within a spectral band of about 0,2 nm optical signals are transmitted.

However, as seen from Fig. 4 a group delay introduced by this filter is significant and would cause an unduly distorted optical signal.

According to the invention a severe improvement is achieved if the optical filter and an optical element are used which optical element compensates for or flattens at least a portion of a group delay profile which profile is generated by said optical filter.

Said optical element advantageously also is an optical filter and a combination of both elements generates a group delay profile which has less pronounced ripples than a group delay profile caused by the optical filter itself and has also less pronounced ripples than a group delay profile of said optical element.

In a preferred embodiment, the optical filter and the optical element are spatially separated. Moreover, the optical element comprises a reflective filter arrangement and comprises in a most preferred embodiment $\lambda/4$ dielectric layers.

For manufacturing purposes a further most preferred embodiment of said reflective filter arrangement consist entirely of $\lambda/4$ dielectric layers. To provide an improved entire reflection behaviour said reflective filter arrangement may consist of $\lambda/4$ layers except for a couple of anti-reflex layers, e.g. the last three or less layers of the stack which are located next to an environmental medium.

If said reflective filter arrangement consist of $\lambda/4$ dielectric layers except for a couple of first layers, e.g. for three or less layers of the stack which are located adjacent to a substrate of said filter said couple of first layers may be used for a phase compensation of for instance a metallic mirror.

According to the invention metallic as well as dielectric reflectors are useable.

In a preferred embodiment, a major surface of the optical element is inclined relative to an optical axis of the optical filter arrangement.

A preferred angle of inclination of said major surface of said optical element relative to said optical axis is in a range of 0 to 8 degrees.

It is even more preferred to have an angle of inclination of said major optical axis relative to said optical path in arrange of 2 to 6 degrease.

In a most preferred embodiment said angle of inclination of said major surface of said optical element relative to said optical axis is less than 3 degrees or in a range of 3 to 5 degrees.

According to the invention, a preferred embodiment of said optical filter arrangement causes a group delay within the transmission band of said optical filter of less than 2, 5 ps.

In a further preferred embodiment the optical element generates essentially the inverse spectral phase shift of a spectral phase shift generated by said first optical filter within at least a portion of the spectral transmission band of said first optical filter.

The invention is described in more detail in view of preferred and most preferred embodiments and reference is made to the drawings wherein:

Fig. 1    shows pole locations in the complex wavenumber plane of an optical filter having a transmittance shape factor which may be expressed based on four complex valued poles which is shown in Fig. 2,

Fig. 2    shows the transmittance shape factor for an optical filter having said pole locations of Fig. 1, and

Fig. 3    shows a spectral group delay profile of the filter having pole locations as shown in Fig. 1 and a spectral transmittance shape factor as shown in Fig. 2,

Fig. 4    shows pole positions for another optical filter with a spectral transmission shape factor as shown in Fig. 5 deliberately adjusted for low group delay ripple as shown in Fig. 6,

Fig. 5    shows transmission shape and contributing pole functions for said filter,

Fig. 6    shows a group delay profile with very low group delay ripple of the filter referred to in Fig. 5 and the contributing poles referred to in Fig. 4,

Fig. 7    shows a non compensated group delay profile of the first inventive embodiment, the spectral behaviour of an uncompensated optical filter within a transmission interval of about 0,2 nm of a second inventive embodiment,

Fig. 8    shows the average group delay within an interval of about 0.3 nm of the pass-band of the optical filter in Fig. 7 and undesirable excursions from that average group delay marked as hatched areas resulting in a group delay ripple of roughly 18 ps (being 38ps - 20ps) which is at least partially compensated by the optical element of the first inventive embodiment,

Fig. 9    shows an enlarged view of a compensated spectral group delay profile of the optical filter which was obtained from an uncompensated group delay profile 30 shown in Fig. 10 by use of an optical element according to the first inventive embodiment comprising a flattening or compensating group delay profile as shown in Fig. 10 by numeral 28,

Fig. 10    shows the flattened spectral group delay, the group delay profile of the optical filter and the group delay profile of an optical element designed according to the second inventive embodiment,

Fig. 11    shows a compensating spectral group delay profile of the optical element according to the second inventive embodiment,

Fig. 12    shows a schematic plan view of an optical filter arrangement comprising an optical filter and in addition an optical element with a first surface reflective stack,

Fig. 13    shows a schematic plan view of an optical filter arrangement comprising an optical filter and in addition an optical element with a second surface reflective stack,

Fig. 14    shows a schematic plan view of an optical filter arrangement comprising an optical filter and in addition an optical element according to Fig. 13 enabling a space saving arrangement,

Fig. 15    shows a schematic plan view of an optical filter arrangement comprising an optical filter and an optical element as a combined substrate or solid state device.

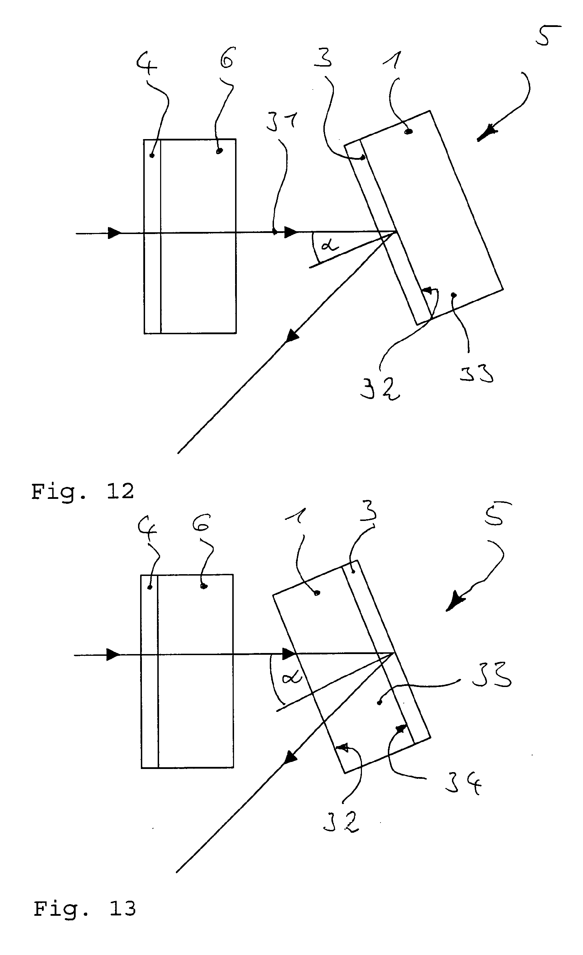

The Invention is described below in more detail and reference is made to the accompanying drawings. However, for a better understanding of the inventive concepts, basic ideas are discussed in advance of the description of the preferred embodiments. To that end a combination of an optical element 1 comprising a highly reflecting mirror 3 and a first optical filter 2 defining an optical filter arrangement 4 is considered in more detail as it is shown e.g. in Fig. 12:

We denote $r_f$, $t_f$ as the amplitude reflection and transmission coefficients of the first optical filter 2 and $r_m$, $r_m$ as the amplitude reflection and transmission coefficients of the highly reflecting mirror 3.

For the sake of simplicity, let in the following theoretical description the "mirror" be a dielectric $\lambda/4$ or quarter-

wave stack mirror as known by a person skilled in the art.

We denote, r, t as the amplitude reflection and transmission coefficients of the combination mirror-filter. The following relationships are valid then:

$$\frac{1}{t} = \frac{1}{t_m}\left[\frac{1}{t_f} + \frac{r_f^*}{t_f^*}r_m\right] \tag{1}$$

$$\frac{r}{t} = \frac{1}{t_m}\left[\frac{r_f}{t_f} + \frac{1}{t_f^*}r_m\right] \tag{2}$$

where $r_f^*$ is the conjugate amplitude reflection coefficient.

For more details in view of relations between spectral characteristics for the direct and reverse waves, see f. i. Sh. A. Furman and A. V. Tikhonravov, Basics of Optics of Multilayer Systems, Editions Frontieres, Gif-sur-Yvette, 1992.

We further assume that $r_m = 1$ or at least about 1. In this case

$$\frac{r}{t} \approx \frac{1}{t_m}\left[\frac{r_f}{t_f} + \frac{1}{t_{f\,m}^*}\right] \approx \left(\frac{1}{t_f}\right) \tag{3}$$

It follows from Eq. (3) that

$$\mathtt{arg}\left(\frac{r}{t}\right) \approx \mathtt{arg(t)}$$

or

$$\mathrm{arg}(r) \approx 2\,\mathrm{arg}(t)$$

and finally that

$$\tag{4}\quad \frac{d}{d_{(t)}}(\mathrm{arg}\,r) \approx 2\cdot\frac{d}{d_{(t)}}(\mathrm{arg}\,t))$$

From Eq. 4 it follows (for $r_m \approx 1$) for the group delay of a reflected amplitude $GD_{refl.}$ and the group delay of a transmitted amplitude $GD_{transm.}$:

$$\tag{5}\quad GD_{refl.} \approx 2GD_{transm.}$$

Let us remember $GD_{transm.}$ is defined by the poles of t (k) .

We now consider the group delay GD of a filter which should be compensated or the ripples within the group delay should be flattened.

Obviously, the combination of two functions $f_j(k)$ may be suitable for the compensation of the group delay ripples in the transmitted group delay profile 5.

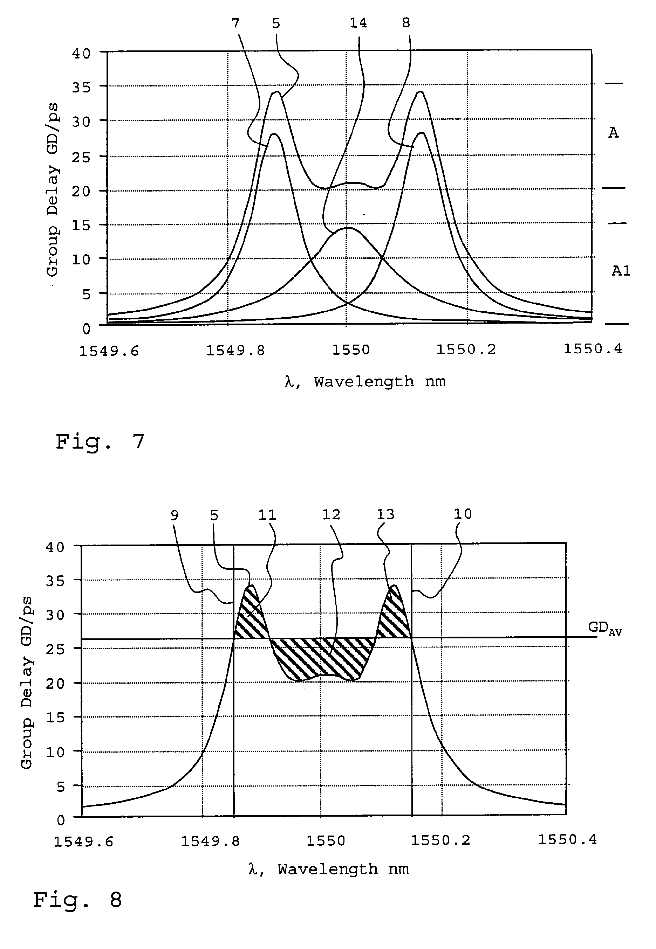

Consequently, it is highly advantageous to use a combination of a dielectric mirror comprising a two cavity filter structure which has 2 poles near $\lambda_0 \approx 1551.4$nm [1] to reduce the GD ripple of the filter whose group delay profile 5 is shown in Fig. 7.

To compensate or flatten the profile, these two poles should be closer to $k_0$ than the outer poles generating the group delay profile 5.

Quarter wave systems have been discussed and in addition also systems having layers behaving like quarter wave systems at turning point monitoring when producing said multilayer filters, i.e. layers having similar compensating effects as quarter wave systems, are apt to serve as quarter wave systems and such layers are also deemed to be quarter wave, i.e $\lambda/4$ layers according to the invention.

A more technical than theoretical description of the invention is given below in view of preferred and most preferred embodiments.

Detailed Description of preferred and most preferred Embodiments

In general, the invention relates to an optical filter 4 as shown in Fig. 12 which is supported by a transparent substrate 6 and which optical filter generates a first group delay profile as shown in Fig. 7 and which is designated with numeral 5.

Said group delay profile is derived from a complex valued conjugate amplitude transmission coefficient having spectral representations as shown by curves 7 and 8 of Fig. 7. For a better understanding of this type of representation of complex valued amplitude transmission coefficients see for instance Sh. A. Fuhrmann and A. V. Tikhonravov as cited above.

If an average group delay $GD_{AV}$ is calculated for instance within a portion of the pass band of optical filter 4 as indicated by lines 9 and 10 in Fig. 8, then this average group delay $GD_{AV}$ is defined within boundaries 9 and 10 based on hatched areas 11, 12 and 13, i.e. hatched areas 11 and 13 have about the same area as hatched area 12.

Accordingly, within boundaries 9 and 10, i.e. within the pass band of the optical filter 4 an average group delay $GD_{AV}$ exists for each interval and for each pair of spectral boundaries 9 and 10 defining a non-zero spectral interval, i.e. spectral boundaries 9 and 10 are not restricted to predefined values.

However, advantageously spectral boundaries 9 and 10 are defining a portion of the pass band covering between 90 and 50 % of the pass band and are covering in a most preferred embodiment at least 60 % of the pass band of optical filter 4.

Areas 11, 12 and 13 are termed group delay ripples having maximum values at local maximum or local minimum values of group delay profile curve 5 within boundaries 9, 10, i.e. within the passband of optical filter 4. Any local spectral value of a Group delay GD minus $GD_{AV}$ is termed according to the invention in the description and in the claims group delay ripple or group delay ripple value.

According to the invention a group delay profile 14 as shown in Fig. 7 and as generated for instance by an optical element 1 comprising a highly reflective mirror 3 is apt to cause a severe flattening of group delay profile 5, as described in more detail below.

Flattening or compensating of a group delay profile is according to the definition of the invention a reduction of areas 11, 12 and 13, i.e. a reduction of group delay ripples in the group delay profile.

Moreover, an inverse spectral phase shift is defined as a negative phase shift relative to a positive phase shift where said phase shift is related to the average group delay $GD_{AV}$. According to this definition area 12 is caused by a negative phase shift relative to average group delay $GD_{AV}$ and areas 11, 13 are caused by a positive phase shift relative to $GD_{AV}$. Consequently curve 14 of Fig. 7 generates an inverse phase shift relative to a phase shift or area 12.

Moreover, the invention is not restricted to embodiments where said optical filter 4 and said optical element 3 have identical transmission or reflection pass bands. It is sufficient according to the invention if a combination of transmission and reflection coefficients meet predefined filter pass band characteristics.

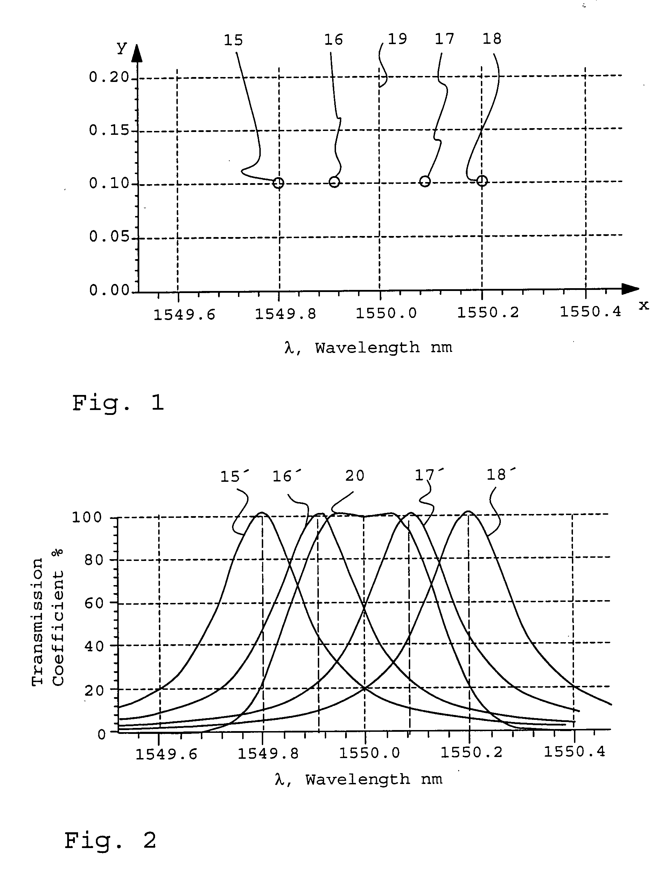

For an even better understanding reference is made to Fig. 1 showing a pole representation in a complex wavenumber plane where $\lambda$ represents the wavelength of a different examplary band-pass filter with a filter centre wavelength of 1550,0 nm and complex valued poles 15, 16, 17 and 18.

Poles 16 and 17 as well as poles 15 and 18 are symmetrically arranged relative to center wavelength 19. A distance from center wavelength $\lambda_0$ of the location of a pole indicates the real part of refractive index or index and the complex portion of said index of refraction of poles 15, 16, 17 and 18 is expressed by the Y-coordinate of the respective pole.

Poles 15, 16, 17 and 18 are generating complex valued transmission coefficients 15', 16' 17'and 18' as well known to a person skilled in the art and as shown in Fig. 4 providing a spectral complex valued transmission coefficient 20 having a 90% Transmission pass-band width of about 0,3 nm.

A respective group delay generated by complex valued transmission functions 15', 16', 17' and 18' is shown as group delay 15", 16", 17", 18" generating a transmission group delay $GD_{transm.}$ 21 of optical filter 4.

A steep filter characteristic with a flat pass-band region causes in case of said optical transmission filter 4 a pronounced ripple of the group delay profile or high group delay ripple values which renders this optical filter useless for optical signal transmission purposes, especially narrow band optical filters, e.g. with a filter channel spacing of 100Ghz or 50Ghz.

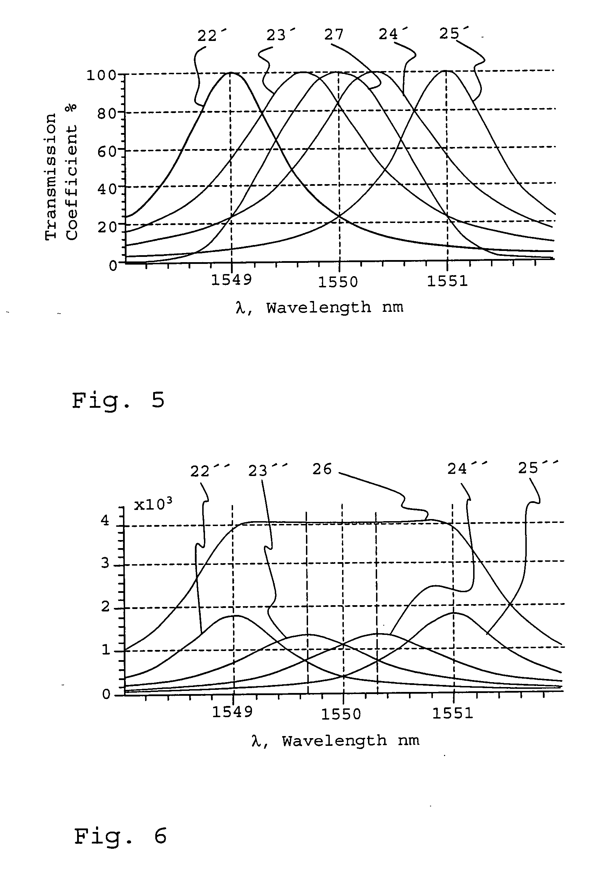

The maximum allowable pulse broadening is limited 10% of the bit period. To avoid an undue bit distortion a group delay value of less than 2.5 ps is required for a 40 Gbit/s transmission optical signal stream which group delay value is at least twice as high in the exemplary filter embodiment shown in Fig. 5.

If to the contrary a group delay profile is optimized as shown with another exemplary filter in Fig. 8 by adopting poles 22, 23, 24 and 25, a flat group delay profile 26 is generated by respective group delays 22", 23", 24", 25" of poles 22, 23, 24 and 25.

Unfortunately, an unwanted and spectrally broad transmission filter shape 27 as obtained by spectral coefficients 22', 23', 24' and 25' of poles 22, 23, 24 and 25 is not useful for ultra narrow optical pass band filters because such filters show inferior channel isolation.

Consequently, at a first glance it seems to be impossible to obtain an ultra narrow band optical transmission filter, e.g. having a bandwidth of 50 GHz or 100 GHz and having a group delay of less than 2.5ps or even 1.5ps for avoiding excessive pulse broadening leading to undue bit error rates in high data rate optical signal transmission.

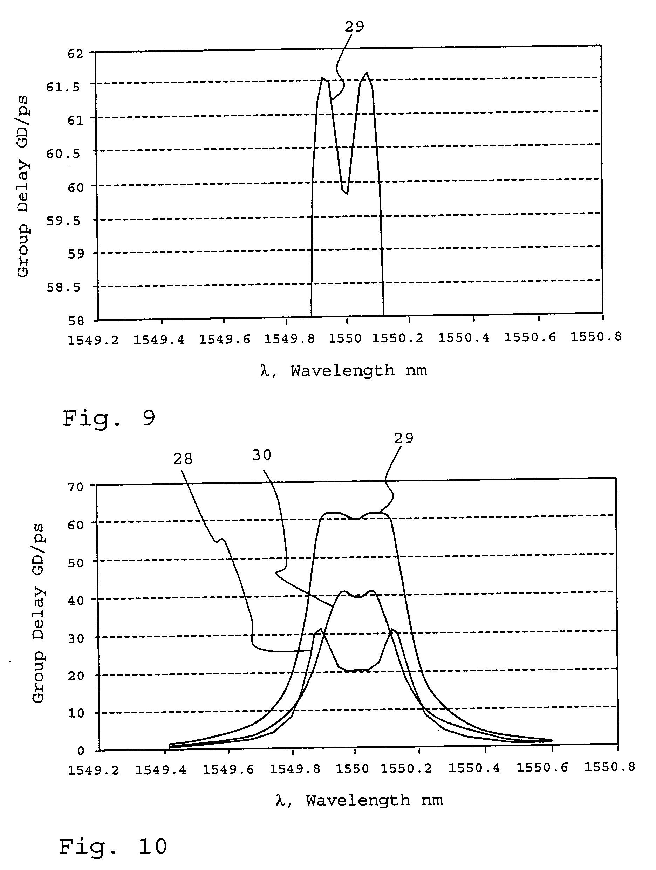

According to the invention however, it surprisingly is possible to improve a group delay profile as shown for instance in Fig. 9 and designated within numeral 28 of an ultra narrow band steep pass band optical filter and to obtain a group delay profile 29 having a peak which is shown in an enlarged representation in Fig. 10 showing a group delay ripple over the group delay profile of less than about 2.0 ps. To that end a further group delay profile 30 was introduced into the optical path 31 which further group delay profile is generated by optical element 1 comprising a highly reflecting filter arrangement 3.

As seen from Fig. 3, equation 5 is fulfilled, i.e.

$$GD_{refl.} \sim 2GD_{transm.}$$

Moreover, improved results are also obtained if a factor of 2 between $GD_{refl.}$ and $GD_{transm.}$ is exceed.

An associated filter design of reflective filter arrangement 3 is shown for a glass substrate 6 and layer material $SiO_2$ and $TA_2O_5$ in table 1 for a number of 88 dielectric layers most of them $\lambda/4$ dielectric layers, except for layer 29 and 69 being high index spacer layers of 3d order and 2nd order, respectively, and the two layers 87 and 88 adjacent to the environmental medium.

Table 1. exemplary shows a table of a group delay profile flattening filter according to claim 10, which optical element also is termed simply group delay flattener comprising a spectral group delay profile of the optical element of the second inventive embodiment leading to a group delay profile or group delay behaviour of the second inventive embodiment shown in Fig. 9

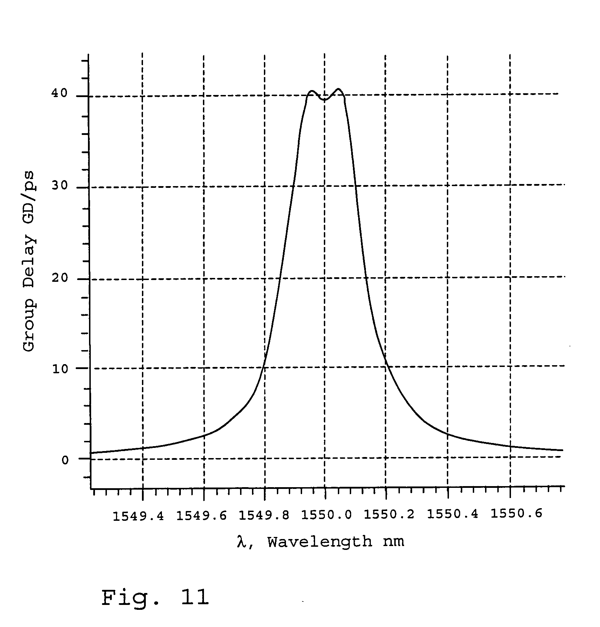

A further group delay profile is shown in Fig. 11 for an optical arrangement comprising an optical filter 4 and an optical element 3 compensating or flattening at least a portion of a group delay profile as seen for instance in Fig. 12 to 15 having a filter band width of about 0,4 nm and ripples which are less than 2.5 ps.

In addition, this design which was improved according to the invention has a filter transmission function with edges being steeper than within the design shown in Fig. 7 by numeral 27.

Consequently, according to the invention ultra-narrow pass-band filters are provided having severely reduced ripples and a severely reduced pulse broadening of high bit rate transmitted optical signals.

In a first preferred embodiment as shown in Fig. 12 optical filter 4 and optical element 1 are spatially separated.

The reflective filter arrangement 3 is arranged on a first major surface 32 of an optical substrate 33. Major surface 32 is inclined relative to an optical axis defined by optical path 31 by an angle of inclination a. In a preferred embodiment this angle of inclination of said major optical surface relative to the optical path 31 is in a range of 0 to 8 degrees.

In a more preferred embodiment said angle of inclination of said major optical surface relative to said optical path is in a range of 2 to 6 degrees and in a most preferred embodiment said angle of inclination of said major optical surface 33 relative to said optical path 31 is in a range of 3 to 5 degrees.

In a further preferred embodiment as shown in Fig. 13 said highly reflecting filter arrangement is located at a second major optical surface 34 of optical substrate 33.

The latter preferred embodiment comprises an anti reflective coating on the first major optical surface 32 and a metallic or dielectric layer on in the vicinity of the environmental medium.

For the $\lambda/4$ layers of the optical filter 4 and reflecting filter arrangement 3 as suitable low and high index material combinations are chosen preferably from the materials $SiO_2$ and $Ta_2O_5$ or any other suitable combinations of high and low index material as known to a person skilled in the art especially depending on precise design requirements.

However, especially at increasing angles of incidence a polarisation dependant discrepancy in group delay profile between P and S polarised light can be achieved by introducing a suitable third material with an intermediate refractive index, laying between said chosen low and high index material as mentioned in the paragraph before. This is important in order to prevent excessive polarisation depend loss at high angles of incidence.

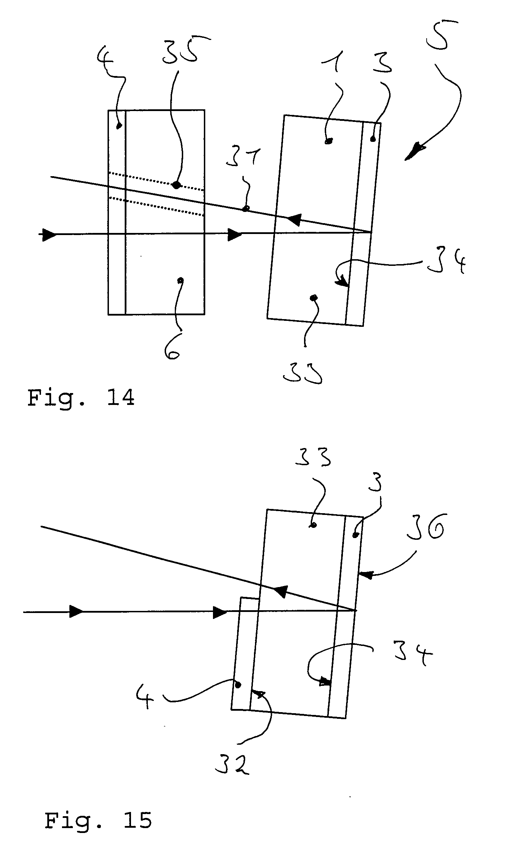

A further preferred embodiment is shown in Fig. 14 where a reduced angle of inclination $\alpha$ is realised by means of a bore or a cut-out or a recess 35 through which optical path 31 of the reflected signal extends.

In a further most preferred embodiment shown in Fig. 15, optical filter 4 is supported by said first major surface 32 and said second major surface 34 supports said reflective filter arrangement 3 of optical element 1. In this embodiment said first major surface 32 is only partially covered by said first optical filter 3 to allow for a small angle of inclination $\alpha$.

In all of the embodiments shown in Figs. 13 to 15, said metallic layer in the vicinity of said environmental medium is alternatively overcoated with a further metallic layer of a different metal than said metallic layer for enhancing optical and durability properties which metal for said further metallic layer is chosen from a group consisting of chromium, copper and inconel.

In a generally preferred embodiment said reflective filter arrangement of the above-described reflective filter arrangement 3 consist entirely of $\lambda/4$ dielectric layers.

In a further preferred embodiment said reflective filter arrangement 3 consists of $\lambda/4$ dielectric layers except for a couple of last layers, e.g. three or less last layers of the stack which are located adjacent to an environmental medium as e.g. air and are used for anti-reflection purposes as well known for a person skilled in the art.

In a further preferred embodiment said reflective filter arrangement consists of $\lambda/4$ dielectric layers except for a couple of first layers, e.g. three or less first layers adjacent to substrate 33 of filter arrangement 3 for adaptation purposes of a phase as well known by a person skilled in the art.

In a most preferred embodiment, said reflective filter arrangement 3 consists of $\lambda/4$ dielectric layers except for said couple of first layers of the stack which are located adjacent to substrate 33 of filter arrangement 3 and except for said couple of last layers of the stack which are located adjacent to the environmental medium.

For the purposes of generating a predefined reflectivity, said reflective optical element comprises in addition to said $\lambda/4$ dielectric layers a dielectric or metallic reflector.

In case of a metallic reflector a metallic layer is arranged between substrate 33 and the $\lambda/4$ dielectric layer stack of filter arrangement 3 or is located at a surface 36 in the vicinity of the environmental medium. The said metallic layer consists of gold, silver, aluminium or any another highly reflective metal frequently used as a metallic mirror material.

In addition to said metallic layer, adaptation layers are arranged on the surface of said metallic layer adapting a reflection phase of said metallic reflector to a transmission function of the plurality of $\lambda/4$ dielectric layers.

Even though the above description made reference to four pole optical filter designs, the invention is not restricted to such a four pole optical layer design. In general, said reflecting filter arrangement comprises two or more spacer layers of 1st or higher order k being the number of half wave layers, said layer being a contiguous combination of two quarter wave or $\lambda/4$ layers, defining a spacer within the layer design with 2k $\lambda/4$ dielectric layers of high or low refractive index material.

For an optical filter having a number of m spacer layers typically n spacer layers of 1st or higher order k with 2k $\lambda/4$ dielectric layers and with n $\geq$ 2 and n = m - 1 is sufficient for a suitable flattening of a group delay profile, this applies to an optical filter spacer count of 5 or less.

Said optical filter 4 and said reflective filter arrangement 3 may be obtained by use of a design program for example V 3.51 or newer like Optilayer V3.51 or newer available from Optilayer Ltd. in Moscow or any other dedicated filter design tool apt to realize a relation of group delay of transmitted and reflected optical signal especially as defined by equation 5.

Moreover, up to now it was not possible to obtain an optical transmission filter for a 100 GHz channel spacing, as defined f.i. in the ITU-GRID 100GHz spacing definitions, having a group delay of less then 2 ps as useful for an optical 40 Gb/s transmission rate. In this regards only optical filters adapted to 10 Gb/s transmission rates were realised up to now.

However, this is different according to the invention as such a specification which is needed for an optical 40Gb/s transmission rate with a channel spacing of 100 GHz is easily can be met.

## Claims

**1.** Optical filter arrangement comprising
an optical filter and

an optical element compensating or flattening at least a portion of a group delay profile generated by said optical filter.

2. Optical filter arrangement according to claim 1 wherein said optical filter is a first optical filter having a first spectral transmission band and
said optical element is a second optical filter having a second spectral reflection band.

3. Optical filter arrangement according to claim 2 wherein
said first optical filter generates a first group delay profile
and
said optical element generates a second group delay profile
with an overall group delay profile of an optical path comprising said first optical filter and said optical element having less group delay ripple than said first group delay profile within at least a spectral range in which a transmission coefficient of said first optical filter is greater than zero.

4. Optical filter arrangement according to claim 3 wherein
said first optical filter generates a first group delay profile and
said optical element generates a second group delay profile which is apt to at least partially flatten said first group delay profile generated by said first optical filter.

5. Optical filter arrangement according to claim 4
wherein a combination of said first spectral transmission band of said first optical filter and said second spectral reflection band of said second optical element is adapted to a predefined optical filter transmission band.

6. Optical filter arrangement according to claim 1 wherein
said first optical filter and said optical element are spatially separated.

7. Optical filter arrangement according to claim 1 wherein
said optical element comprises a reflecting filter arrangement.

8. Optical filter arrangement according to claim 7 wherein said reflective filter arrangement comprises a plurality of $\lambda/4$ dielectric layers.

9. Optical filter arrangement according to claim 7 wherein said reflective filter arrangement consists entirely of $\lambda/4$ dielectric layers.

10. Optical filter arrangement according to claim 7 wherein said reflective filter arrangement consists of $\lambda/4$ dielectric layers except for a couple of last layers of the stack which are located adjacent to an environmental medium.

11. Optical filter arrangement according to claim 7 wherein said reflective filter arrangement consists of $\lambda/4$ dielectric layers except for a couple of first layers of the stack which are located adjacent to a substrate of said filter arrangement.

12. Optical filter arrangement according to claim 7 wherein said reflective filter arrangement consists of $\lambda/4$ dielectric layers except for a couple of first layers of the stack which are located adjacent to a substrate of said filter arrangement and except for a couple of last layers of the stack which are located adjacent to an environmental medium.

13. Optical filter arrangement according to claim 7 wherein said optical element comprises a dielectric reflector.

14. Optical filter arrangement according to claim 7 wherein said optical element comprises a metallic reflector.

15. Optical filter arrangement according to claim 7 wherein a reflector is arranged on a first surface of a substrate and said reflective filter arrangement is a first surface reflective filter arrangement.

16. Optical filter arrangement according to claim 7 wherein said reflective filter arrangement comprises a first major surface and a second major surface with said first major surface supporting said optical filter and said second major surface supporting said reflective filter arrangement of said optical element.

17. Optical filter arrangement according to claim 16 wherein said first major surface is partially covered by said first optical filter.

18. Optical filter arrangement according to claim 16 wherein said reflective filter arrangement consists entirely of $\lambda/4$ dielectric layers.

19. Optical filter arrangement according to claim 16 wherein said reflective filter arrangement consists of $\lambda/4$ dielectric layers except for a couple of last layers of the stack which are located adjacent to an environmental medium.

20. Optical filter arrangement according to claim 16 wherein said reflective filter arrangement consists of $\lambda/4$ dielectric layers except for a couple of first layers of the stack which are located adjacent to a substrate of said filter arrangement.

21. Optical filter arrangement according to claim 16 wherein said reflective filter arrangement consists of $\lambda/4$ dielectric layers except for a couple of first layers of the stack which are located adjacent to a substrate of said filter arrangement and except for a couple of last layers of the stack which are located adjacent to an environmental medium.

22. Optical filter arrangement according to claim 16 wherein said reflective filter arrangement comprises a metallic layer in the vicinity of said environmental medium.

23. Optical filter arrangement according to claim 22 wherein said metallic layer comprises one of the group comprising silver, gold, copper and aluminum.

24. Optical filter arrangement according to claim 23 wherein said metallic layer in the vicinity of said environmental medium is overcoated with a further metallic layer of a different metal than said metallic layer with metal for said further layer chosen from a group comprising chromium, copper and inconel.

25. Optical filter arrangement according to claim 14 wherein
adaptation layers are arranged on the surface of said metallic reflector adapting a reflection phase of said metallic reflector to a transmission function of said plurality of $\lambda/4$ dielectric layers.

26. Optical filter arrangement according to claim 7 wherein
a major surface of said optical element is inclined relative to an optical axis defined by a propagation path of an optical signal propagating through said optical filter arrangement.

27. Optical filter arrangement according to claim 26 wherein said angle of inclination of said major optical surface relative to said optical path is in a range of 0 to 8 degrees.

28. Optical filter arrangement according to claim 26 wherein said angle of inclination of said major optical surface relative to said optical path is in a range of 2 to 6 degrees.

29. Optical filter arrangement according to claim 26 wherein
said angle of inclination of said major optical surface relative to said optical path is in a range of 3 to 5 degrees.

30. Optical filter arrangement according to claim 1 wherein a combination of said first optical filter and said optical element generates a group delay profile within the transmission band of said first optical filter generating a group delay ripple which is less than 2,5 ps.

31. Optical filter arrangement according to claim 1 wherein a combination of said first optical filter and said optical element generates a group delay profile within the transmission band of said first optical filter generating a group delay ripple which is less than 2,5 ps.

32. Optical filter arrangement according to claim 1 wherein said optical element generates essentially the inverse spectral phase shift of a spectral phase shift generated by said first optical filter within at least a portion of the spectral transmission band of said first optical filter.

33. Optical filter arrangement comprising
a first optical filter and

a ripple flattener said ripple flattener compensating or flattening at least a portion of ripples in a spectral transmission band of said an optical filter.

34. Optical filter arrangement according to claim 33 wherein
said ripple flattener comprises an optical element as defined in claim 7.

35. Ripple flattener for an optical filter comprising
a reflective filter arrangement as defined in claim 7.

36. Group delay flattener for an optical filter comprising
a reflective filter arrangement with an optical element as defined in claim 7.

37. Group delay flattener for an optical filter according to claim 35 comprising two or more spacer layers of $1^{st}$ or higher order k with 2k $\lambda$/4 dielectric layers of high index material.

38. Group delay flattener for an optical filter according to claim 36 comprising two or more spacer layers of $1^{st}$ or higher order k with 2k $\lambda$/4 dielectric layers of low index material.

39. Group delay flattener for an optical filter according to claim 36 comprising n spacer layers of $1^{st}$ or higher order k with 2k $\lambda$/4 dielectric layers and with n being an integer n $\geq$ 2 and n = m - 1 with m being the number of spacer layers of said optical filter.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

**European Patent Office**

**EUROPEAN SEARCH REPORT**

Application Number

EP 01 11 5917

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 098 212 A (JDS UNIPHASE INC) 9 May 2001 (2001-05-09) * abstract; figures 1-22 * | 1,7,33, 37 | G02B6/34 |
| A | EP 1 065 813 A (MARCONI COMM LTD) 3 January 2001 (2001-01-03) * abstract; figure 1A * | 1,33 | |

| | |
|---|---|
| | TECHNICAL FIELDS SEARCHED (Int.Cl.7) |
| | G02B |

The present search report has been drawn up for all claims

| Place of search | Date of completion of the search | Examiner |
|---|---|---|
| THE HAGUE | 23 November 2001 | Malic, K |

EPO FORM 1503 03.82 (P04C01)

**ANNEX TO THE EUROPEAN SEARCH REPORT**
**ON EUROPEAN PATENT APPLICATION NO.**                    EP 01 11 5917

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2001

| Patent document cited in search report | | | Publication date | Patent family member(s) | | Publication date |
|---|---|---|---|---|---|---|
| EP 1098212 | A | | 09-05-2001 | CN | 1300950 A | 27-06-2001 |
| | | | | CN | 1295258 A | 16-05-2001 |
| | | | | EP | 1098211 A1 | 09-05-2001 |
| | | | | EP | 1098212 A1 | 09-05-2001 |
| | | | | US | 2001021053 A1 | 13-09-2001 |
| EP 1065813 | A | | 03-01-2001 | AU | 4373900 A | 04-01-2001 |
| | | | | CN | 1291727 A | 18-04-2001 |
| | | | | EP | 1065813 A2 | 03-01-2001 |
| | | | | GB | 2355610 A ,B | 25-04-2001 |
| | | | | JP | 2001077757 A | 23-03-2001 |
| | | | | NO | 20003413 A | 02-01-2001 |